# FASCICULE DE BREVET EUROPEEN

(11) **EP 1 421 123 B1**
(45) Date de publication et mention de la délivrance du brevet: **19.09.2012**
(21) Numéro de dépôt: 02779606.9
(22) Date de dépôt: 02.08.2002
(51) Int. Cl.: C08F 20/18, C08F 2/24, C10M 145/14, C10L 1/10, C08F 226/10

(54) **DISPERSIONS DE LATEX DE POLYMERES ACRYLIQUES COMME ADDITIFS POUR L'INHIBITION DU DEPOT DE PARAFFINES DANS LES HUILES BRUTES ET COMPOSITIONS LES CONTENANT**
ACRYLPOLYMERLATEXDISPERSIONEN ALS ADDITIVE ZUR INHIBIERUNG VON PARAFFINABSCHEIDUNGEN IN ROHÖLEN UND DIESE ENTHALTENDE ZUSAMMENSETZUNGEN
ACRYLIC POLYMER LATEX DISPERSIONS AS ADDITIVES FOR INHIBITING PARAFFIN DEPOSITS IN CRUDE OILS AND COMPOSITIONS CONTAINING SAME

(30) Priorité: 08.08.2001 FR 0110591
(43) Date de publication de la demande: 26.05.2004
(73) Titulaire: CECA S.A., 92250 La Garenne Colombes (FR)
(72) Inventeur: BALOCHE, Alain, F-62880 Annay (FR); JUHUE, Didier, F-69630 Chaponost (FR); PICARD, Philippe, F-69230 Saint Genis Laval (FR); POU, Tong, Eak, F-69540 Irigny (FR); TRUSZKOWSKI, Caroline, F-94600 Choisy-Le-Roi (FR)
(74) Mandataire: Lhoste, Catherine
(86) Numéro de dépôt international: PCT/FR2002/002786
(87) Numéro de publication internationale: WO 2003/014170

(56) Documents cités:
- EP-A- 0 448 166
- WO-A-97/34940
- US-A- 4 110 283
- US-A- 5 418 278

## Description

### DOMAINE TECHNIQUE

Le domaine technique de la présente invention est celui des huiles brutes de pétrole et des additifs destinés à en améliorer les conditions d'exploitation.

Les huiles brutes de pétrole peuvent contenir des fractions importantes de paraffines, dont la quantité et la nature exacte sont variables selon les champs d'extraction. A la température du puits, les paraffines sont liquides et dissoutes dans l'huile brute. Lors de la remontée de l'huile en surface, sa température s'abaisse et les paraffines en cristallisant forment un réseau tridimensionnel d'aiguilles et d'écailles. Il en résulte une perte de fluidité qui rend la production, le transport, le stockage et même le traitement de ces huiles très difficiles. Les bouchages au niveau des pipelines et des appareils de traitement sont fréquents.

### TECHNIQUE ANTERIEURE

On a proposé de nombreux procédés pour résoudre ce problème, comme le raclage mécanique ou bien le chauffage des parois. Ces procédés sont coûteux et leur mise en oeuvre n'est pas toujours possible.

Pour améliorer la rhéologie des pétroles bruts, SHELL a fait oeuvre de pionnier : dans FR 1.575.984, il enseigne que des composés macromoléculaires de type "peignes" construits sur le modèle d'une chaîne principale hydrocarbonée sur laquelle sont greffées des chaînes latérales elles-mêmes hydrocarbonées assez longues, c'est-à-dire d'au moins 14 atomes de carbone et 30 atomes de carbone au plus, peuvent perturber la cristallisation des paraffines lourdes. Cette propriété se développe bien dans les macromolécules dont la masse moléculaire moyenne est comprise entre 1.000 et 1.000.000, et de préférence entre 4.000 et 100.000.

L'art antérieur a ensuite suggéré l'utilisation d'additifs, le plus souvent des polymères dont le rôle est de retarder ou de modifier la cristallisation des paraffines et de ce fait d'améliorer les propriétés d'écoulement de l'huile et d'empêcher l'agglomération des cristaux formés sur les parois.

De nombreux travaux ont ensuite essayé d'améliorer l'efficacité de ces premiers additifs de type polymère soit par la synthèse soit par la formulation, afin de les adapter aux différents types d'huiles brutes rencontrées, et de pallier successivement les difficultés de synthèse et/ou de manipulation des différentes générations de produits. Par exemple FR 2.746.400 au nom de la demanderesse enseigne que des composés macromoléculaires de types peignes associant deux types de distribution de peignes apportent des synergies inattendues en terme d'abaissement du point d'écoulement d'huiles brutes de pétrole. Dans GB 2.305.185 et EP 673.990, SHELL montre l'intérêt d'associer de faibles quantités de monomères polaires en co-polymérisation avec les (méth)acrylates de n-alkyle classiquement utilisés par l'homme de l'art.

Tous ces polymères sont généralement synthétisés par polymérisation radicalaire en solution dans des solvants organiques tels que le toluène, le xylène et des hydrocarbures en général, à une concentration massique de 10 à 60 %, de préférence de 30 à 50 %. Bien qu'efficaces dans la plupart des huiles brutes à de faibles taux allant de 20 à 1.000 ppm, de préférence de 100 à 500 ppm, ces produits représentent l'inconvénient majeur d'être solides au-dessous de 30°C. Leur utilisation sur site nécessite donc leur réchauffement préalable ou leur dilution dans un solvant, par exemple leur solvant de synthèse, jusqu'à des concentrations massiques inférieures à 10 % selon le type de composé et selon la température d'utilisation. Ceci a pour conséquence de majorer les coûts de transport et/ou d'exploitation de ce type d'additifs.

Afin d'obtenir des produits concentrés et liquides sur un large domaine de températures, des solutions ont déjà été proposées :
Ainsi SHELL dans EP 448.166 puis WO 98/51731 et British Petroleum dans WO 98/33846 enseignent la mise en émulsion dans l'eau d'un mélange de copolymères d'acrylate de n-alkyle en présence de tensioactif(s) et/ou de polymères tensioactifs à l'aide d'un homogénéisateur haute pression. Un tel procédé de préparation présente l'inconvénient d'être peu économique industriellement car il nécessite deux étapes de préparation ainsi que l'emploi d'un matériel spécifique d'émulsification.

US 5.418.278 ou EP 359.061 de HENKEL propose de résoudre une partie de ces inconvénients par des émulsions pouvant atteindre 30 à 50 % d'extrait sec contenant des copolymères d'acrylates de n-alkyle et de dérivés éthyléniques insaturés d'acide ou d'anhydride carboxylique en présence d'un tensioactif. L'inconvénient majeur d'une telle solution réside dans le fait que pour être stable, l'émulsion doit contenir une forte quantité d'acide ou d'anhydride, ce qui non seulement peut nuire à la performance globale du produit mais aussi limite son utilisation à des huiles brutes particulières.

### EXPOSE DE L'INVENTION

La présente invention propose des dispersions de latex de copolymères acryliques de composition variable qui sont particulièrement adaptées pour l'abaissement du point d'écoulement des huiles brutes de pétrole.

Ces dispersions présentent l'avantage d'être stables, concentrées et liquides sur un large domaine de températures, notamment proches de la température ambiante. Quand elles sont utilisées pour l'inhibition du dépôt de paraffines dans les huiles brutes, elles ne nécessitent aucun additif pour leur incorporation dans les huiles brutes.

Les dispersions de latex de la présente invention comprennent au moins 100 parties en poids des constituants ① à ④ suivants :
① 5 à 70, de préférence 5 à 58 et avantageusement 5 à 50 parties en poids d'un ou plusieurs (co)polymères dont les motifs sont issus :
   A - de 50 à 100 %, de préférence de 70 à 100 %, en poids d'un ou plusieurs monomères de type (méth)acrylate de n-alkyle, avec n variant de 6 à 40, de préférence de 14 à 30,
   B - de 0 à 50 %, de préférence de 0 à 30 %, en poids d'un ou plusieurs monomères peu solubles dans l'eau (solubilité inférieure à 5 % à 20 °C) de type (méth)acryliques et/ou vinyliques choisi parmi les (méth)acrylates de n-alkyle avec n inférieur ou égal à 6, mais aussi le (méth)acrylate de 2-éthyle hexyle, l'acétate de vinyle, le propionate de vinyle, le butyrate de vinyle, les versatates de vinyle, le pivalate de vinyle, le laurate de vinyle, les monomères vinylaromatiques choisis parmi le styrène et ses dérivés, tels que le α-méthylstyrène,
   C - de 0 à 50 %, de préférence de 0 à 30 % en poids, d'un ou plusieurs monomères polaires choisi parmi les (méth)acrylamides et leurs dérivés tels que la N-méthylolacrylamide, les (méth)acrylates de dialkylaminoéthyle, les dérivés monooléfiniques de l'acide sulfonique et phosphorique tels que l'acide acrylamidométhyle propane sulfonique, la N-vinylpyrrolidone, la vinylpyridine et ses dérivés, les (méth)acrylates d'hydroxyalkyle,
   D - soit de 0 à 0,5 % en poids d'un ou plusieurs monomères choisis parmi les acides ou anhydrides mono- et/ou dicarboxyliques éthyléniquement insaturés lorsque C = 0%,
      - soit jusqu'à 40 % en poids d'un ou plusieurs monomères choisis parmi les acides ou anhydrides mono- et/ou dicarboxyliques éthyléniquement insaturés lorsque C ≠0%
② 0 à 30 parties en poids d'un co-solvant ou d'un mélange de co-solvants, de préférence de 5 à 25, et avantageusement de 5 à 20 parties en poids, choisi parmi les cétones telles que la méthyléthylcétone ou méthylisobutylcétone, les solvants aromatiques tels que le toluène, le xylène et les mélanges d'hydrocarbures aromatiques, les alcools tels que le butanol ou l'isopropanol, les glycols et éthers de polyglycol tels que l'éthylène ou le propylène glycol, le diéthylène glycol ou le dipropylène glycol. De préférence, on choisit le propylène ou le dipropylène glycol mono méthyl ou éthyl éther.
③ 0,1 à 10, de préférence de 0,1 à 8 et avantageusement de 0,5 à 5, parties en poids d'un ou plusieurs tensioactifs (tensioactifs ioniques et/ou non ioniques et/ou colloïdes protecteurs tels que les alcools polyvinyliques, et/ou polymères amphiphiles choisis parmi les sulfates ou les sulfonates d'alcools gras ou d'alkylphénol, mais aussi les alkylbenzène sulfonates et sulfosuccinates, les sels d'ammonium quaternaires tels que les chlorures de diméthyldialkylammonium et les alcools gras éthoxylés)
④ de l'eau (q s p 100 : la somme des constituants ① à ④ représentant 100 parties en poids)
et éventuellement d'autres composants, notamment des additifs de polymérisation et/ou leurs résidus (amorceurs, agents tampon, agents de transfert, ...), des tensio-actifs de faible balance hydrophile-lipophile.

Parmi les dispersions comprenant en tant que co-solvant(s) au moins un ou plusieurs polyols liquides, on préfère celles dont la quantité d'eau représente plus de 40 et avantageusement plus de 50 % du poids de polyol(s) solide(s).

De manière avantageuse, on préfère les dispersions selon l'invention qui comprennent :
① environ 30 à environ 35 parties en poids de (co)polymère(s),
② environ 14 à environ 18 parties en poids de co-solvants, majoritairement à base de polyol(s) liquides(s),
③ environ 1 à environ 4 parties en poids de tensioactifs,
④ le complément à 100 parties en poids en eau,
ainsi qu'au moins un agent amorceur, au moins un agent de transfert, au moins un agent tampon.

Les dispersions de latex selon l'invention sont obtenues par un procédé de polymérisation en émulsion dans l'eau en présence de tensioactif(s) et éventuellement en présence de co-solvant(s)

La polymérisation radicalaire en émulsion est menée de manière classique dans un appareillage connu pour les polymérisations en émulsion selon un procédé batch, semi-batch ou continu. On ne sortirait pas du cadre de l'invention en utilisant un émulsificateur à haute pression type Manton-Gaulin ou en mettant en oeuvre une technique de sonification pour émulsifier le mélange avant polymérisation et adopter un procédé dit de mini-émulsion ou mini-dispersion, afin de diminuer les quantités de co-solvants organiques et de tensioactifs.

On utilise des amorceurs qui produisent des radicaux libres choisis parmi les peroxydes habituels tels que les persulfates, par exemple le persulfate de potassium ou d'ammonium, les hydroperoxydes et peroxydes organiques, le peroxyde d'hydrogène, les peracides, les composés diazoïques, par exemple l'acide 4,4' azobis (4-cyanopentanoïque) ou l'hydrochlorure du 2,2' azobis (2-amidinopropane). Dans certains cas on peut avoir recours à un système redox, par exemple du persulfate d'ammonium associé au métabisulfite de sodium pour travailler à plus basse température.

La réaction de polymérisation peut être menée sur une plage de température allant de 20 à 90 °C, pendant 0,5 à 4 heures selon les conditions d'amorçage choisies. -

Des agents tampons comme par exemple le tétraborate de sodium et des agents de transfert comme par exemple des alkyl mercaptans peuvent être utiles à la polymérisation et aux propriétés finales du produit. La performance des produits de l'invention peut être également notablement améliorée par la post-addition des solvants organiques précédemment cités, mais aussi de tensioactifs également cités avec en plus ceux de faible HLB (mis pour Hydrophilic-Lipophilic Balance, en français balance hydrophile-lipophile), de préférence inférieure ou égale à 5, tels que les esters gras de sorbitan.

Les performances des produits selon l'invention ont été appréciées grâce à la mesure du point d'écoulement selon la norme ASTM D97 qui consiste à additionner l'huile brute portée à une température supérieure à son point d'écoulement, avec une quantité définie d'additif pour l'inhibition du dépôt de paraffine, puis à refroidir le brut par paliers de 3°C, le point d'écoulement représentant la température à partir de laquelle l'huile de brut ne s'écoule plus.

Dans les exemples ci-dessous a été utilisé un appareil HERZOG MP852 dont la détection de l'écoulement est assurée par une caméra LCD.

Tous les additifs d'inhibition du dépôt de paraffines ont été testés dans une huile brute d'Itteville dont le point d'écoulement mesuré selon cette méthode est de 12°C.

### Exemple 1

Dans un réacteur à double-paroi d'un litre équipé d'une agitation, d'un thermomètre, d'un réfrigérant à reflux, d'une arrivée d'azote et d'un bain thermostaté à 50°C, on introduit 220 g d'eau déminéralisée, 2 g de tétraborate de sodium (Borax), 80 g de dipropylèneglycol monométhyléther commercialisé par Dow Chemical sous la dénomination Dowanol DPM et 10 g de bistridécyl sulfosuccinate de sodium commercialisé par Cytec sous la dénomination Aérosol TR70.

Une fois la température de 50 °C atteinte par le milieu, on ajoute un mélange de 169 g d'acrylate de béhényle commercialisé par Atofina sous la dénomination Norsocryl A18-22 et 0,5 g de n-dodécyl mercaptan préalablement fondu à 50°C et on porte le mélange à 80 °C.

On introduit alors en une minute une solution de 1 g de persulfate de potassium dans 20 g d'eau déminéralisée.

Après le pic d'exothermie, on laisse la réaction se dérouler pendant 2 heures, puis on refroidit jusqu'à température ambiante.

Après filtration sur un filtre de 100 µ, on obtient une dispersion de latex stable à environ 35 % d'extrait sec.

On utilise telle quelle la dispersion de latex ainsi obtenue que l'on nomme S1.

### Exemple comparatif 1

Dans un réacteur à double-paroi d'un litre équipé d'une agitation, d'un thermomètre, d'un réfrigérant à reflux, d'une arrivée d'azote et d'un bain thermostaté à 50 °C, on introduit 435 g d'une coupe d'hydrocarbures aromatiques de point d'ébullition 180-200 °C (Solvesso 150) et 553 g d'acrylate de béhényle commercialisé par Atofina sous la dénomination Norsocryl A18-22. Le milieu est porté à 105 °C et on ajoute alors en une heure 3,8 g de perbenzoate de t-butyle commercialisé par Atofina sous la dénomination Trigonox C en solution dans 12 g d'une coupe d'hydrocarbures aromatiques de point d'ébullition 180-200 °C (Solvesso 150)

Le milieu est ensuite maintenu 2 heures à 105 °C de façon à s'assurer de la conversion complète du monomère acrylique.

Après refroidissement à 50 °C, on obtient une solution concentrée à 55 % d'un homopolymère acrylique. Le produit est solide en dessous de 28 °C.

### Exemple 2

A titre de comparaison, on prépare une solution à 5,5 % du produit obtenu dans l'exemple comparatif 1 dans son solvant aromatique de synthèse que l'on appellera S2. Cette opération de dilution est indispensable pour mettre en oeuvre le produit compte tenu de son point de solidification.

Les solutions S1 et S2 sont respectivement additivées au brut d'Itteville à des concentrations variables et les points d'écoulement (PE) des huiles brutes ainsi additivées sont mesurés selon la méthode décrite précédemment. Le tableau ci-après réunit les valeurs du point d'écoulement exprimées en °C.

| Concentration* (ppm) | 0 | 100 | 200 | 500 |
|---|---|---|---|---|
| PE(S1) | 12 | -12 | -18 | -27 |
| PE (S2) | 12 | -9 | -9 | -15 |

| | | | | |
|---|---|---|---|---|
| *la concentration est exprimée en équivalent du produit de l'exemple comparatif 1 à 55 % d'extrait sec. | | | | |

Il apparaît clairement que la dispersion S1 est un additif très efficace pour abaisser le point d'écoulement de l'huile brute d'Itteville, et ceci sans nécessiter aucune dilution pour son utilisation.

### Exemple 3

On procède selon le mode opératoire décrit à l'exemple 1, mais en supprimant le dipropylèneglycol monométhyléther et en remplaçant une partie des 169 g d'acrylate de béhényle par 25 g de N-vinyl pyrrolidone.

On utilise la dispersion de latex ainsi obtenue telle quelle, nommée S3 pour additiver du brut d'Itteville. Le tableau ci-après réunit les valeurs du point d'écoulement exprimées en °C.

| Concentration* (ppm) | 0 | 500 |
|---|---|---|
| PE(S3) | 12 | -18 |

| | | |
|---|---|---|
| *la concentration est exprimée en équivalent du produit de l'exemple comparatif 1 à 55 % d'extrait sec. | | |

On constate que la solution S3 selon l'invention, additivée au brut Itteville, abaisse particulièrement le point d'écoulement comme le montre le tableau ci-dessus.

### Exemple 4

Dans un réacteur à double-paroi d'un litre équipé d'une agitation, d'un thermomètre, d'un réfrigérant à reflux, d'une arrivée d'azote et d'un bain thermostaté à 50°C, on introduit 225 g d'eau déminéralisée, 81 g de Dowanol DPM, 18 g de Sc, 4 g de chlorure de N-alkyl diméthyl benzyl ammonium et 14 g d'un mélange d'alcools gras éthoxylés de HLB 15.

Une fois la température de 50°C atteinte par le milieu, on ajoute un mélange de 169 g de Norsocryl A18-22 et 0,5 g de n-dodécyl mercaptan préalablement fondu à 50°C et on porte le mélange à 70°C.

On introduit alors en une minute une solution de 1 g de dihydrochlorure de 2,2' azobis (2-amidinopropane) dans 20 g d'eau déminéralisée.

Après le pic d'exothermie, on laisse la réaction se dérouler pendant 2 heures, puis on refroidit jusqu'à température ambiante.

Après filtration sur un filtre de 100 µm, on obtient une dispersion de latex stable à environ 35% d'extrait sec.

La dispersion de latex ainsi obtenue, nommée S4, est utilisée telle quelle dans l'huile brute d'Itteville.

| Concentration* (ppm) | 0 | 300 |
|---|---|---|
| PE(S4) | 12 | -12 |

| | | |
|---|---|---|
| *la concentration est exprimée en équivalent du produit de l'exemple comparatif 1 à 55 % d'extrait sec. | | |

On constate que la solution S4, additivée au brut Itteville abaisse particulièrement le point d'écoulement.

### Exemple 5

On reprend la synthèse décrite dans l'exemple 1, mais au cours du refroidissement, on post-additionne respectivement 1,7 et 3,4 g d'un tensioactif non-ionique de type alcool gras éthoxylé (commercialisé par la société CECA sous la dénomination Remcopal 10), pour obtenir les solutions respectivement S5 et S6. Les points de figement (PF) de ces solutions ont été mesurés de la même façon que les points d'écoulement des huiles brutes. Le tableau ci-après regroupe les valeurs des points de figements de S5 et S6 ainsi que celui de la solution S1 :

| Produit | S1 | S5 | S6 |
|---|---|---|---|
| PF (°C) | 0 | -10 | -13 |

On constate que la post-addition d'un tensioactif non-ionique permet d'améliorer de manière significative la stabilité à basse température des produits de l'invention.

## Revendications

1. Dispersions de latex comprenant :
① 5 à 70, de préférence 5 à 58 et avantageusement 5 à 50 parties en poids d'un ou plusieurs (co)polymères dont les motifs sont issus :
A - de 50 à 100 %, de préférence de 70 à 100 %, en poids d'un ou plusieurs monomères de type (méth)acrylate de n-alkyle, avec n variant de 6 à 40, de préférence de 14 à 30,
B - de 0 à 50 %, de préférence de 0 à 30 %, en poids d'un ou plusieurs monomères peu solubles dans l'eau (solubilité inférieure à 5 % à 20 °C) de type (méth)acryliques et/ou vinyliques choisi parmi les (méth)acrylates de n-alkyle avec n inférieur ou égal à 6, mais aussi le (méth)acrylate de 2-éthyle hexyle, l'acétate de vinyle, le propionate de vinyle, le butyrate de vinyle, les versatates de vinyle, le pivalate de vinyle, le laurate de vinyle, les monomères vinylaromatiques choisis parmi le styrène et ses dérivés, tels que le α-méthylstyrène,
C - de 0 à 50 %, de préférence de 0 à 30 %, en poids d'un ou plusieurs monomères polaires choisi parmi les (méth)acrylamides et leurs dérivés tels que la N-méthylolacrylamide, les (méth)acrylates de dialkylaminoéthyle, les dérivés monooléfiniques de l'acide sulfonique et phosphorique tels que l'acide acrylamidométhyle propane sulfonique, la N-vinylpyrrolidone, la vinylpyridine et ses dérivés, les (méth)acrylates d'hydroxyalkyle,
D - soit de 0 à 0,5 % en poids d'un ou plusieurs monomères choisis parmi les acides ou anhydrides mono- et/ou dicarboxyliques éthyléniquement insaturés lorsque C = 0%,
- soit jusqu'à 40 % en poids d'un ou plusieurs monomères choisis parmi les acides ou anhydrides mono- et/ou dicarboxyliques éthyléniquement insaturés lorsque C #0%
② 0 à 30 parties en poids d'un co-solvant ou d'un mélange de co-solvants, de préférence de 5 à 25, et avantageusement de 5 à 20 parties en poids, choisi parmi les cétones telles que la méthyléthylcétone ou méthylisobutylcétone, les solvants aromatiques tels que le toluène, le xylène et les mélanges d'hydrocarbures aromatiques, les alcools tels que le butanol ou l'isopropanol, les glycols et éthers de polyglycol tels que l'éthylène ou le propylène glycol, le diéthylène glycol ou le dipropylène glycol, de préférence le propylène ou le dipropylène glycol mono méthyl ou éthyl éther,
③ 0,1 à 10, de préférence de 0,1 à 8 et avantageusement de 0,5 à 5, parties en poids d'un ou plusieurs tensioactifs (tensioactifs ioniques et/ou non ioniques et/ou colloïdes protecteurs tels que les alcools polyvinyliques, et/ou polymères amphiphiles choisis parmi les sulfates ou les sulfonates d'alcools gras ou d'alkylphénol, mais aussi les alkylbenzène sulfonates et sulfosuccinates, les sels d'ammonium quaternaires tels que les chlorures de diméthyldialkylammonium et les alcools gras éthoxylés)
④ de l'eau (qsp 100),
et éventuellement d'autres composants, tels que des additifs de polymérisation et/ou leurs résidus (amorceurs, agents tampon, agents de transfert, ...), des tensio-actifs de faible balance hydrophile-lipophile.

2. Dispersions selon la revendication 1 comprenant en tant que co-solvant(s) un ou plusieurs polyols liquides, pour lesquelles la quantité d'eau représente plus de 40 % et avantageusement plus de 50 % du poids de polyol(s) solide(s)

3. Dispersions selon la revendication 1 ou 2 comprenant :
① environ 30 à environ 35 parties en poids de (co)polymère(s),
② environ 14 à environ 18 parties en poids de co-solvants, de préférence majoritairement à base de polyol(s) liquides(s),
③ environ 1 à environ 4 parties en poids de tensioactifs,
④ le complément à 100 parties en poids en eau,
et au moins un agent amorceur, au moins un agent de transfert, au moins un agent tampon.

4. Procédé de préparation de dispersions de latex telles que définies dans l'une quelconque des revendications 1 à 3 par polymérisation radicalaire en émulsion dans l'eau en présence de tensioactif(s) et éventuellement en présence d'un ou plusieurs co-solvants.

5. Procédé selon la revendication 4, **caractérisé en ce que** les amorceurs radicalaires sont choisis parmi les peroxydes habituels tels que les persulfates, les hydroperoxydes et peroxydes organiques, le peroxyde d'hydrogène, les peracides, les composés diazoïques, par exemple l'acide 4,4' azobis (4-cyanopentanoïque) ou l'hydrochlorure du 2,2' azobis (2-amidinopropane) ou les systèmes redox, tel que lepersulfate d'ammonium associé au métabisulfite de sodium.

6. Procédé selon la revendication 4 ou 5, **caractérisé en ce que** la réaction de polymérisation est menée sur une plage de température allant de 20 à 90 °C, de préférence pendant une durée allant de 0,5 à 4 heures.

7. Procédé selon l'une quelconque des revendications 4 à 6, **caractérisé en ce qu'**il met en oeuvre des agents tampons tel que le tétraborate de sodium et/ou des agents de transfert tels que les alkyl mercaptans.

8. Procédé selon l'une quelconque des revendications 4 à 7, caractérisé parla post-addition de(s) solvant(s) organique(s), de préférence de(s) co-solvant(s) et/ou de tensioactif(s), de préférence de HLB inférieure ou égale à 5, tels que les esters gras de sorbitan.

9. Utilisation des dispersions de latex telles que définies à l'une quelconque des revendications 1 à 3 pour inhiber le dépôt de paraffines dans les huiles brutes de pétrole, soit par ajout direct dans l'huile brute , soit sous forme de compositions diluées contenant lesdites dispersions et un ou plusieurs solvants tels que l'eau et/ou un ou plusieurs solvants organiques, de préférence choisis parmi les co-solvants desdits latex.

## Claims

1. Latex dispersions comprising:
① from 5 to 70, preferably from 5 to 58 and advantageously from 5 to 50 parts by weight of one or more (co)polymers, the units of which result:
A - from 50 to 100% by weight, preferably from 70 to 100% by weight, of one or more monomers of n-alkyl (meth)acrylate type, with n being from 6 to 40, preferably from 14 to 30,
B - from 0 to 50% by weight, preferably from 0 to 30% by weight, of one or more monomers which are relatively insoluble in water (solubility of less than 5% at 20°C) of (meth)acrylic and/or vinyl type chosen from n-alkyl (meth)acrylates with n less than or equal to 6, but also 2-ethylhexyl (meth)acrylate, vinyl acetate, vinyl propionate, vinyl butyrate, vinyl versatates, vinyl pivalate, vinyl laurate or vinylaromatic monomers chosen from styrene and its derivatives, such as α-methylstyrene,
C - from 0 to 50% by weight, preferably from 0 to 30% by weight, of one or more polar monomers chosen from (meth)acrylamides and their derivatives, such as N-methylolacrylamide, dialkylaminoethyl (meth)acrylates, monoolefinic derivatives of sulphonic and phosphoric acid, such as acrylamidomethylpropanesulphonic acid, N-vinylpyrrolidone, vinylpyridine and its derivatives, or hydroxyalkyl (meth)acrylates,
D - either from 0 to 0.5% by weight of one or more monomers chosen from ethylenically unsaturated mono- and/or dicarboxylic acids or anhydrides when C = 0%,
- or up to 40% by weight of one or more monomers chosen from ethylenically unsaturated mono- and/or dicarboxylic acids or anhydrides when C ≠ 0%,
② from 0 to 30 parts by weight of a cosolvent or of a mixture of cosolvents, preferably from 5 to 25 parts by weight and advantageously from 5 to 20 parts by weight, chosen from ketones, such as methyl ethyl ketone or methyl isobutyl ketone, aromatic solvents, such as toluene, xylene and mixtures of aromatic hydrocarbons, alcohols, such as butanol or isopropanol, glycols and polyglycol ethers, such as ethylene or propylene glycol, diethylene glycol or dipropylene glycol, preferably propylene or dipropylene glycol monomethyl or monoethyl ether,
③ from 0.1 to 10 parts by weight, preferably from 0.1 to 8 parts by weight and advantageously from 0.5 to 5 parts by weight of one or more surfactants (ionic and/or nonionic surfactants and/or protective colloids, such as polyvinyl alcohols, and/or amphiphilic polymers chosen from sulphates or sulphonates of fatty alcohols or of alkylphenol, but also alkylbenzenesulphonates and sulphosuccinates, quaternary ammonium salts, such as dimethyldialkylammonium chlorides, and ethoxylated fatty alcohols),
④ water (q.s. for 100),
and optionally other components, such as polymerization additives and/or their residues (initiators, buffers, transfer agents, and the like), surfactants having a low hydrophilic-lipophilic balance.

2. Dispersions according to Claim 1, comprising, as cosolvent(s), one or more liquid polyols, for which the amount of water represents more than 40% and advantageously more than 50% of the weight of solid polyol(s).

3. Dispersions according to Claim 1 or 2, comprising:
① approximately 30 to approximately 35 parts by weight of (co)polymer(s),
② approximately 14 to approximately 18 parts by weight of cosolvents, preferably predominantly based on liquid polyol(s),
③ approximately 1 to approximately 4 parts by weight of surfactants,
④ the remainder to 100 parts by weight of water,
and at least one initiator, at least one transfer agent and at least one buffer.

4. Process for the preparation of latex dispersions as defined in any one of Claims 1 to 3 by radical emulsion polymerization in water in the presence of surfactant(s) and optionally in the presence of one or more cosolvents.

5. Process according to Claim 4, **characterized in that** the radical initiators are chosen from the usual peroxides, such as persulphates, organic hydroperoxides and peroxides, hydrogen peroxide, peracids, diazo compounds, for example 4,4'-azobis(4-cyanopentanoic acid) or 2,2'-azobis-(2-amidinopropane)hydrochloride, or redox systems, such as ammonium persulphate in combination with sodium metabisulphite.

6. Process according to Claim 4 or 5, **characterized in that** the polymerization reaction is carried out over a temperature range extending from 20 to 90°C, preferably for a period of time ranging from 0.5 to 4 hours.

7. Process according to any one of Claims 4 to 6, **characterized in that** it employs buffers, such as sodium tetraborate, and/or transfer agents, such as alkyl mercaptans.

8. Process according to any one of Claims 4 to 7, **characterized by** the postaddition of organic solvent(s), preferably of cosolvent(s) and/or surfactant(s), preferably with an HLB of less than or equal to 5, such as sorbitan fatty esters.

9. Use of the latex dispersions as defined in any one of Claims 1 to 3 for inhibiting the deposition of paraffins in crude petroleum oils, either by direct addition to the crude oil or in the form of dilute compositions comprising the said dispersions and one or more solvents, such as water and/or one or more organic solvents, preferably chosen from the cosolvents of the said latexes.

## Patentansprüche

1. Latexdispersionen, umfassend:
① bis 70 Gewichtsteile, vorzugsweise 5 bis 58 Gewichtsteile und vorteilhafterweise 5 bis 50 Gewichtsteile eines oder mehrerer (Co)polymere, deren Einheiten sich von:
A - 50 bis 100 Gew.-% und vorzugsweise 70 bis 100 Gew.-% eines oder mehrerer Monomere vom n-Alkyl(meth)acrylat-Typ, wobei n von 6 bis 40 und vorzugsweise von 14 bis 30 reichen kann,
B - 0 bis 50 Gew.-% und vorzugsweise 0 bis 30 Gew.-% eines oder mehrerer wenig wasserlöslicher Monomere (Löslichkeit unter 5% bei 20°C) vom (Meth)acryl- oder Vinyl-Typ, ausgewählt unter n-Alkyl(meth)acrylaten mit n kleiner gleich 6, aber auch 2-Ethylhexyl(meth)acrylat, Vinylacetat, Vinylpropionat, Vinylbutyrat, Vinylversataten, Vinylpivalat, Vinyllaurat, vinylaromatischen Monomeren, die unter Styrol und Derivaten davon, wie a-Methylstyrol, ausgewählt sind,
C - 0 bis 50 Gew.-% und vorzugsweise 0 bis 30 Gew.-% eines oder mehrerer polarer Monomere, ausgewählt unter (Meth)acrylamiden und Derivaten davon wie N-Methylolacrylamid, Dialkylaminoethyl-(meth)acrylaten, monoolefinischen Derivaten von Sulfonsäure und Phosphorsäure wie Acrylamidomethylpropansulfonsäure, N-Vinylpyrrolidon, Vinylpyridin und Derivaten davon, Hydroxyalkyl(meth)-acrylaten,
D - 0 bis 0,5 Gew.-% eines oder mehrerer Monomere, die unter ethylenisch ungesättigten Mono- und/oder Dicarbonsäuren oder Anhydriden davon ausgewählt sind, wenn C = 0%,
- oder bis zu 40 Gew.-% eines oder mehrerer Monomere, die unter ethylenisch ungesättigten Mono- und/oder Dicarbonsäuren oder Anhydriden davon ausgewählt sind, wenn C ≠ 0%,
ableiten,
② 0 bis 30 Gewichtsteile eines Cosolvens oder einer Mischung von Cosolventien, vorzugsweise 5 bis 25 Gewichtsteile und vorteilhafterweise 5 bis 20 Gewichtsteile, ausgewählt unter Ketonen wie Methylethylketon oder Methylisobutylketon, aromatischen Lösungsmitteln wie Toluol, Xylol und Mischungen von aromatischen Kohlenwasserstoffen, Alkoholen wie Butanol oder Isopropanol, Glykolen und Polyglykolethern wie Ethylen- oder Propylenglykol, Diethylenglykol oder Dipropylenglykol, vorzugsweise Propylen- oder Dipropylenglykolmonomethylether oder -monoethylether,
③ 0,1 bis 10 Gewichtsteile, vorzugsweise 0,1 bis 8 Gewichtsteile und vorteilhafterweise 0,5 bis 5 Gewichtsteile von einem oder mehreren Tensiden (ionischen und/oder nichtionischen Tensiden und/oder Schutzkolloiden wie Polyvinylalkoholen und/oder amphiphilen Polymeren, ausgewählt unter Fettalkohol- oder Alkylphenolsulfaten oder -sulfonaten, aber auch Alkylbenzolsulfonaten und -sulfosuccinaten, quaternäre Ammoniumsalze wie Dimethyldialkylammoniumchloriden und ethoxylierten Fettalkoholen),
④ Wasser (q.s. ad 100)
und gegebenenfalls weitere Komponenten, wie Polymerisationsadditive und/oder Rückstände davon (Initiatoren, Puffersubstanzen, Übertragungsmittel usw.), Tenside mit niedrigem Hydrophilie-Lipophilie-Gleichgewicht.

2. Dispersionen nach Anspruch 1, umfassend als Cosolvens bzw. Cosolventien ein oder mehrere flüssige Polyole, für die die Wassermenge mehr als 40 Gew.-% und vorteilhafterweise mehr als 50 Gew.-% festes Polyol bzw. feste Polyole repräsentiert.

3. Dispersionen nach Anspruch 1 oder 2, umfassend:
① ungefähr 30 bis ungefähr 35 Gewichtsteile (Co)-polymer(e),
② ungefähr 14 bis ungefähr 18 Gewichtsteile Cosolventien, vorzugsweise hauptsächlich auf Basis eines oder mehrerer flüssiger Polyole,
③ ungefähr 1 bis ungefähr 4 Gewichtsteile Tenside,
④ Rest auf 100 Gewichtsteile Wasser
und mindestens einen Initiator, mindestens ein Übertragungsmittel, mindestens eine Puffersubstanz.

4. Verfahren zur Herstellung von Latexdispersionen gemäß einem der Ansprüche 1 bis 3 durch radikalische Emulsionspolymerisation in Wasser in Gegenwart von Tensid(en) und gegebenenfalls in Gegenwart von einem oder mehreren Cosolventien.

5. Verfahren nach Anspruch 4, **dadurch gekennzeichnet, dass** man die radikalischen Initiatoren unter üblichen Peroxiden wie Persulfaten, organischen Hydroperoxiden und Peroxiden, Wasserstoffperoxid, Persäuren, Azoverbindungen, beispielsweise 4,4'-Azobis(4-cyanopentansäure) oder 2,2'-Azobis(2-amidinopropan)-hydrochlorid, oder Redoxsystemen, wie Ammoniumpersulfat in Kombination mit Natriummetabisulfit, auswählt.

6. Verfahren nach Anspruch 4 oder 5, **dadurch gekennzeichnet, dass** man die Polymerisationsreaktion über einen Temperaturbereich von 20 bis 90°C und vorzugsweise über einen Zeitraum von 0,5 bis 4 Stunden durchführt.

7. Verfahren nach einem der Ansprüche 4 bis 6, **dadurch gekennzeichnet, dass** man Puffersubstanzen wie Natriumtetraborat und/oder Übertragungsmittel wie Alkylmercaptane verwendet.

8. Verfahren nach einem der Ansprüche 4 bis 7, **gekennzeichnet durch** Nachzugabe eines oder mehrerer organischer Lösungsmittel, vorzugsweise eines oder mehrerer Cosolventien, und/oder eines oder mehrerer Tenside, vorzugsweise mit einem HLB-Wert kleiner gleich 5, wie Sorbitanfettester.

9. Verwendung der Latexdispersionen gemäß einem der Ansprüche 1 bis 3 zur Inhibierung der Abscheidung von Paraffinen in rohen Erdölen entweder durch direkte Zugabe zu dem Rohöl oder in Form von verdünnten Zusammensetzungen, die die Dispersionen und ein oder mehrere Lösungsmittel wie Wasser und/oder ein oder mehrere organische Lösungsmittel, die vorzugsweise unter den Cosolventien des Latex ausgewählt sind, enthalten.
